# EUROPEAN PATENT APPLICATION

(11) **EP 4 717 341 A1**
(43) Date of publication of application: **01.04.2026**
(21) Application number: 24222768.4
(22) Date of filing: 23.12.2024
(51) Int. Cl.: B01D 53/04, B01D 53/047

(54) **DISTRIBUTED DAC SYSTEM AND COMPONENTS FOR USE WITH EXISTING HVAC SYSTEMS**

(30) Priority: 25.09.2024 US 202463698687 P
(71) Applicant: Siemens Energy Global GmbH & Co. KG, 81739 München (DE)
(72) Inventor: Jamison, Susanne, Orlando, 32832 (US); Stickler, Scott, Belle Isle, 32809 (US); Meek, David J., Oviedo, 32765 (US); Hatcher, Jr., Clifford, Orlando, 32826 (US); Cabral Moreira, Leticia, Kissimmee, 34746 (US)

(57) **Abstract**

A method of distributed direct air carbon capture for use with HVAC systems, including the steps of installing a filter assembly in a HVAC unit, adsorbing carbon dioxide in the filter by circulating a carbon dioxide containing gas through the filter, removing the filter assembly from the HVAC unit when the sorbent media has reached a predefined adsorption limit of carbon dioxide, replacing the filter assembly with a fresh filter assembly, storing the full filter assembly in a transportation unit, configuring the transportation unit to maintain a temperature and provide a sealed environment, filling the transportation unit with a plurality of full filter assemblies and relocating the transportation unit to a Desorption facility, configuring the transportation unit to interface with the desorption facility and preforming a desorption process for the plurality of full filter assemblies within the transportation unit, collecting an amount of carbon dioxide from the transportation unit.

## Description

### CROSS-REFERENCE TO RELATED APPLICATIONS

PCT/US2024/038118

### BACKGROUND

While carbon dioxide (CO₂) is a naturally occurring chemical compound, which is present in the Earth's atmosphere, the increase of atmospheric CO₂ over the years has been linked to climate change. Efforts have been made to reduce CO₂ emissions via clean energy. Removing CO₂ from the atmosphere via negative emission technologies (NETs), including the process commonly referred to as carbon capture or direct air capture (DAC).

DAC units are being developed that make use of a fan to draw ambient air over a material to capture CO₂. Commonly, the material used is sorbent in a liquid or solid. These materials become saturated such that they cannot absorb or adsorb any more CO₂. After capturing the CO₂, typically heat is applied to the material to release the CO₂ (or any known method of desorption) where the CO₂ may be sequestered or processed further. The material is then used for further CO₂ capturing from ambient air. Thus, the typical DAC unit cycles between capturing CO₂ and releasing the CO₂. This cyclical transition is done by having multiple containers with the sorbent where at any time a portion of the containers is exposed to air to capture CO₂ and another portion is exposed to heat to release the CO₂. This cycle occurs with the material in situ, which is while the sorbent is retained in the DAC unit for both the CO₂ capture and the CO₂ release. These are large industrial type units which are designed to capture substantial amounts releasing of CO₂. For example, over 100 tons per year. As a result, they have a substantial footprint and are costly to build.

In PCT/US2024/038118 a method and filter for collecting and desorbing CO₂ at separate locations as well as a heating, ventilation and air conditioning (HVAC) filter to facilitate the collection is described. The filter design is for use in an HVAC with direct air capture (DAC) capacity suitable for the disclosed method. The advantage to integrating DAC into an HVAC system is that a mechanism for forcing air over a filter is preexistent in an HVAC system. However, the technical problem is that adding a DAC sorbent to the HVAC filter increases the differential pressure over the filter, thus increasing the required energy input for the HVAC system. This increased energy translates to higher CO₂ emissions, thus reducing or eliminating the effectiveness of the DAC component of the filter.

Onsite adsorption and desorption by a specially adapted HVAC system has been attempted but sufferers from the same problem of producing additional carbon emissions due to increased energy requirements by the circulation system of the HVAC unit, and or the energy required to desorb the sorbent used by the particular application. The carbon filtration or capture equipment have been an add on and work in conjunction with the existing HVAC unit, adding to the existing pressure drop across the system. Additionally, these all in one units can be cost prohibitive due to increased initial costs over a conventional HVAC unit, compounded by low production volume of carbon dioxide and the additional space required by additional hardware. Economic viability is unlikely without heavy subsidies or tax incentives. Different sorbent materials have been attempted, such as single use filters which are difficult or not cost effective to desorb. Other filters are designed to create limestone via a reaction with quicklime, but cannot be used as a source of CO₂ or cannot be used in a cyclic process, or cannot easily be reused.

In a distributed DAC network intended for use with carbon filtering HVAC filters, the DAC filters are intended to be collected in a regular collection program and desorbed at a local, central facility, where they are rinsed to remove particulates and CO₂ removed/captured from the filters. The freshly rinsed and desorbed filters can then be returned to the disparate adsorption sites and swapped for filters ready for desorption. The feasibility of a distributed DAC network from an economic and emissions perspective requires the process to be efficient and retain captured CO₂ during processing. Currently, distributed DAC networks have not been economically feasible due to the cost of filters, energy costs, and transportation costs. Distributed DAC networks have not been feasible as a negative emissions technology due to added emissions from increased pressure drop across HVAC filters and transportation emissions.

Many sorbent medias used for DAC are designed to undergo desorption via a temperature or pressure differential. During the transportation of the DAC filters to a desorption facility, CO₂ can unintentionally be lost (released) due to increased temperatures within transport vehicles, i.e. the inside of container or cargo truck, as the DAC filters can be exposed to higher temperatures in transport vehicles than it is in indoor spaces where CO₂ adsorption occurs. Additionally, a significant operational challenge is present when thousands of DAC filters are placed into a transport vehicle and then transferred to desorption machinery and then back again into the vehicle for delivery. Conventional HVAC filters are designed to be disposable and are generally too fragile to transport loose. Reusable HVAC filters are more robust but can be significantly more expensive than a disposable filter of the same size, and are designed to be washed on site without any collection or transportation required.

An inherent issue with DAC is that the atmospheric concentration of CO₂ is low, the energy demand to capture and purify the CO₂ from atmospheric air is necessarily large due to both the inherently large separation energy required to purify very dilute solutions and the necessity of processing a large amount of air in order to capture sufficient quantities of CO₂. Outdoors, on average, approximately 4 in every 10,000 air molecules is a carbon dioxide molecule, thus a lot of air needs to be processed for the capturing agent (sorbent) to come into contact with a carbon dioxide molecule.

Residential buildings and other occupied indoor spaces, like homes, schools, offices, gyms, malls, etc., suffer from poor indoor air quality (IAQ) and/or high energy demands for ventilation. The poor IAQ is in part due to having higher than ambient concentrations of CO₂ caused by conventional HVAC units which can lead to adverse health effects. Better ventilation, improving IAQ, requires more energy, because more outdoor air needs to be processed to dilute the contaminants indoors. The additional energy requirements needed for conventional methods of improving IAQ result in an increase in carbon emissions. Many academic studies have shown that CO₂ concentrations in schools are elevated, reaching levels up to 2000-3000 ppm (Schibuola, 2019; Turanjanin, 2014; Batterman, 1995). The American Society of Heating, Refrigeration and Air Conditioning Engineers (ASHRAE) standard 62-2001 prescribes levels of CO₂ below 1000 ppm. Adverse health effects have been attributed to increased concentrations of CO₂, including significant and meaningful reductions in decision-making performance (Satish, 2012).

A DAC system is generally composed of a system used to pass large amounts of air over a sorbent and a system to desorb the sorbent, which can be done by varying the heat, pressure, vacuum, moisture, solubility and/or electrochemical environment. Current state-of-the-art DAC focuses on passing air through the sorbent medium in order to increase the rate of adsorption, thus increase the production capacity of the DAC facility. However, sorbents spontaneously adsorb CO₂ without the forced passing of air over the media, albeit much more slowly. Many sorbents reach equilibrium capacity within a day or two via passive adsorption but can reach their capacity within an hour or two with forced air flow.

### BRIEF SUMMARY

It is therefore a goal of the present invention to provide a method and apparatus for distributed direct air carbon capture for use with existing HVAC systems or passive carbon capture using a sorbent media which overcomes the above-mentioned disadvantage(s). The present invention overcomes the disadvantages by centralizing desorption within mobile desorption chambers and standardizing sorbent filters to work with existing HVAC units.

An objective of the invention is achieved by decreasing atmospheric concentration of carbon dioxide and, concurrently, improve poor indoor air quality (IAQ) due to high levels of carbon dioxide which build up indoors through the design of an HVAC filter with DAC capabilities that fits into existent HVAC systems without necessitating any modifications of the HVAC system or increasing the pressure differential across the filter above the equivalent value for a paper AC filter with the same MERV rating. IAQ can advantageously be improved by a passive carbon capture filter assembly, as several passive adsorption stations can be installed in one building or placed in areas of high carbon dioxide concentration.

An objective of the invention is achieved by a transportation chamber designed to hold a plurality of filter assemblies in a pneumatically sealed chamber that is temperature controlled or insulated. In one embodiment the transportation chamber is advantageously configured to operate as a mobile desorption chamber.

An objective of the invention is achieved by decreasing atmospheric concentration of carbon dioxide and, concurrently, improve poor IAQ due to high levels of carbon dioxide which build up indoors through the design of an HVAC filter with DAC capabilities that fits into existent HVAC systems without necessitating any modifications of the HVAC system or increasing the pressure differential across the filter above the equivalent value for a paper AC filter with the same MERV rating.

An object of the present invention is achieved by decreasing atmospheric concentration of carbon dioxide and, concurrently, improve poor IAQ due to high levels of carbon dioxide which build up indoors. This is accomplished through a novel two-fold approach. The first novel aspect of this invention is a distributed approach to CO₂ capture (adsorption) in dispersed indoor areas (residential and/or commercial) followed by collection and transportation to a centralized desorption hub to collect and purify the CO₂. The second aspect is a novel design of a reusable air filter with DAC capabilities to be placed in indoor spaces as a standalone cartridge which passively filters out carbon dioxide from the surrounding area.

The invention of a passive adsorption cartridge may advantageously be collected, desorbed, and returned every few days or weekly, allows for much lower energy requirements for the adsorption phase of DAC. The lower productivity is compensated for by collecting from many sites where the filters are transported to a single desorption facility. This also offers the advantage that only one desorption facility needs to be manufactured to service hundreds to thousands of adsorption sites.

In one embodiment a distributed approach to CO₂ capture from indoor locations advantageously positions passive carbon capture filter assemblies at locations of higher CO₂ concentrations (higher concentration than outdoor locations), such as, schools, office spaces, residential locations, malls, gyms, and hospitals.

Collecting CO₂ from indoor spaces has the advantage in DAC that sorbents have higher capacity at increased CO₂ concentrations, translating to an increased amount of CO₂ that can be adsorbed from the indoor space. This increased concentration also inherently decreases the energy required to separate it from the other components of air. Collecting the carbon dioxide in many different buildings improves IAQ in a larger number of indoor spaces, but also provides many adsorption locations with higher than ambient concentrations, reducing the energy requirement for the separation of CO₂ from air. Decoupling the adsorption site from the desorption site offers the advantage that CO₂ can be captured at all these sites with increased concentrations of CO₂, without the need to build all the machinery necessary to desorb at every location. This significantly reduces the environmental and financial costs of implementation as well as upkeep and repairs.

In one embodiment, the sorbent media spontaneously adsorb CO₂ without the forced passing of air over the sorbent media, albeit much more slowly than a forced or active adsorption DAC configuration. Many sorbents reach equilibrium capacity within a day or two via passive adsorption but can reach their capacity within an hour or two with forced or active air flow.

In one embodiment of the invention, a passive adsorption cartridge or filter assembly is advantageously collected, desorbed, and returned every few days or weekly, allowing for much lower energy requirements for the adsorption phase of DAC versus an active adsorption DAC configuration. The lower productivity is compensated for by collecting from many sites where the filters are transported to a single desorption facility. This also offers the advantage that only one desorption facility needs to be manufactured to service hundreds to thousands of adsorption sites.

In one embodiment, the passive filter assembly advantageously reduces energy consumption of the entire DAC process by eliminating the need for an energy input during the adsorption phase without severely limiting the production capacity or requiring the need for significant infrastructure at every capture location, allowing collection in any space. This method is accomplished by distributing the CO₂ adsorption (collection) sites throughout a localized network of indoor spaces through passive air adsorption. The CO₂-laden filters are collected and desorbed at a central facility and then returned to the collection site. Emissions and costs are minimized by eliminating the need to build infrastructure at every site and eliminating the need for energy input at adsorption sites. It also allows smaller businesses, residential sites, and commercial sites with little available space for additional infrastructure to use the product and service. Additionally, a reduction in emissions can be realized by transporting lightweight filters instead of rocks as in limestone based solutions, and emissions are further reduced by performing the desorption process in large batches of filters which can be done more efficiently. The decentralized hub for desorption and distribution of adsorption sites allows DAC systems to become both more economically and more environmentally feasible. It also allows for the participation of concerned individuals in a system that improves climate conditions (similar to a recycling program). This invention simultaneously solves two problems, poor IAQ caused by the buildup of CO₂ in indoor spaces and allows for more energetically favorable capture of CO₂ from areas with higher than ambient concentrations.

In one embodiment, a method of distributed direct air carbon capture for use with existing HVAC systems includes the steps of replacing a conventional HVAC filter at a plurality of adsorption locations with a filter assembly, configuring the filter assembly to match the conventional HVAC filter in a set of dimensions and a pressure drop, and including a particulate filter and a sorbent media as a combined filter within a frame, installing the filter assembly in a HVAC unit, absorbing carbon dioxide in the sorbent media of the combined filter by circulating a carbon dioxide containing gas through the combined filter via the HVAC unit, removing the filter assembly from the HVAC unit when the sorbent media has reached a predefined adsorption limit of carbon dioxide, replacing the filter assembly with a fresh filter assembly that has not yet reached the predefined adsorption limit of carbon dioxide, storing the full filter assembly in a transportation unit, configuring the transportation unit to maintain a transport temperature and provide a sealed environment, filling the transportation unit with a plurality of full filter assemblies and relocating the transportation unit to a Desorption facility, configuring the transportation unit to interface with the desorption facility and performing a desorption process for the plurality of full filter assemblies within the transportation unit, collecting an amount of carbon dioxide from the transportation unit.

In one embodiment, a method may further include the steps of configuring the transportation unit to include at least one mobile desorption chamber, each mobile desorption chamber including at least one fluid port, and at least one extraction port.

In one embodiment, a method may also include further includes the steps of configuring the at least one mobile desorption chamber to include a plurality of fluid passages within a plurality of channels, evenly distributing the plurality of fluid passages across a surface area of each of the plurality of full filter assemblies suppling the plurality of fluid passages of the at least one mobile desorption chamber with a cleaning agent via the at least one fluid port, releasing particulates trapped within the plurality of full filter assemblies by spraying the cleaning agent on the plurality of full filter assemblies, removing the used cleaning fluid and particles via the at least one extraction port of the transportation unit.

In one embodiment, a method may also include further includes the steps of configuring the fluid passages to include a plurality of nozzles, releasing particulates trapped within the plurality of full filter assemblies by spraying the cleaning fluid on the plurality of full filter assemblies via the plurality of nozzles, removing the used cleaning fluid and particles via an extraction port of the at least one mobile desorption chamber of the transportation unit.

In one embodiment, a method may also include further includes the steps of configuring the plurality fluid passages to circulate a heat transfer fluid to heat or cool the plurality of full filter assemblies, indirectly heating the plurality of full filter assemblies during the desorption process with the heat transfer fluid.

In one embodiment, a method of distributed direct air capture for use with passive carbon capture includes the steps of installing passive adsorption stations at a plurality of adsorption locations with a passive filter assembly, configuring the passive filter assembly to passively adsorb carbon dioxide while supported by a frame, adsorbing carbon dioxide in the sorbent media of the passive filter assembly by exposing the sorbent media to a carbon dioxide containing gas, removing the passive filter assembly from the passive adsorption station when the sorbent media has reached a predefined adsorption limit of carbon dioxide, replacing the passive filter assembly with a fresh passive filter assembly that has not yet reached the predefined adsorption limit of carbon dioxide, storing the full passive filter assembly in a transportation unit, configuring the transportation unit to maintain a transport temperature and provide a sealed environment, filling the transportation unit with a plurality of full passive filter assembly and relocating the transportation unit to a Desorption facility, configuring the transportation unit to interface with the desorption facility and preforming a desorption process for the plurality of full passive filter assembly within the transportation unit, collecting an amount of carbon dioxide from the transportation unit.

In one embodiment, a mobile desorption chamber for use with a plurality of sorbent filters includes, at least one fluid port, at least one extraction port, at least one filter storage unit, a chamber body and chamber body configured to produce a pneumatically sealed environment with a seal, a plurality of channels, where the plurality of sorbent filter can be stored between the channel.

In one embodiment, a mobile desorption chamber may also include where the at least one filter storage unit is a sliding rack.

In one embodiment, a mobile desorption chamber may also include where the at least one filter storage unit is a rotating rack.

In one embodiment, a filter assembly for use with distributed carbon capture includes a combined filter including a particulate filter and a sorbent media, a frame to support the combined filter, where the filter assemblies is configured to match an existing HVAC filter in a set of dimensions and an operational pressure drop.

Other technical features may be readily apparent to one skilled in the art from the following figures, descriptions, and claims.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an embodiment of a combined filter.
FIG. 2 illustrates an embodiment of a combined filter.
FIG. 3 illustrates an embodiment of a filter assembly.
FIG. 4 illustrates a side view of an embodiment of a mobile desorption chamber.
FIG. 5 illustrates an enlargement of the sliding rack of the mobile desorption chamber of FIG. 4.
FIG. 6 illustrates an overhead view of the mobile desorption chamber of FIG. 4.
FIG. 7 illustrates an enlargement of the sliding rack of an embodiment of a mobile desorption chamber.
FIG. 8 illustrates a front view of the mobile desorption chamber of FIG. 4.
FIG. 9 illustrates an overhead view of a transportation unit configured with a mobile desorption chamber in accordance with one embodiment.
FIG. 10 illustrates a front view of the transportation unit of Fig. 9.
FIG. 11 illustrates an embodiment of the present method for distributed direct air carbon capture for use with existing HVAC systems or passive carbon capture in accordance with one embodiment.
FIG. 12 illustrates an electrostatic filter assembly in accordance with one embodiment.
FIG. 13 illustrates a front view of the electrostatic filter assembly of Fig. 12.
FIG. 14A illustrates a cross-sectional view of the electrostatic filter assembly of FIG. 13 through cut plane A-A.
FIG. 14B illustrates enlargement B of the cross-sectional view of the electrostatic filter assembly of FIG. 13 through cut plane A-A.
FIG. 15 illustrates a passive filter assembly in accordance with one embodiment.
FIG. 16A illustrates a cross-sectional view of the passive filter assembly of FIG. 15 through cut plane A-A.
FIG. 16B illustrates enlargement B of the cross-sectional view of the passive filter assembly of FIG. 15 through cut plane A-A.
FIG. 17 illustrates a mobile desorption chamber in accordance with one embodiment.
FIG. 18 illustrates an overhead view of the mobile desorption chamber of FIG. 17 with the chamber door closed.
FIG. 19 illustrates an overhead view of the mobile desorption chamber of FIG. 17 with the chamber door open.
FIG. 20 illustrates an overhead view of the mobile desorption chamber of FIG. 17 with the sliding rack partially installed.
FIG. 21 illustrates a transparent view of the mobile desorption chamber of FIG. 17 with the sliding rack installed.
FIG. 22 illustrates a front view of a transportation unit configured with a mobile desorption chamber in accordance with one embodiment.
FIG. 23 illustrates an overhead view of a transportation unit configured with a mobile desorption chamber of Fig. 22.
FIG. 24 illustrates a loose sorbent filter assembly in accordance with one embodiment.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to apparatus and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus.

It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

Also, unless specified or limited otherwise, the terms "mounted", "connected", "supported", and "coupled" and variations thereof are used broadly and encompass direct and indirect mountings, connections, supports, and couplings. Further, "connected" and "coupled" are not restricted to physical or mechanical connections or couplings.

In addition, the term "adjacent to" may mean: that an element is relatively near to but not in contact with a further element; or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard as available a variation of 20 percent would fall within the meaning of these terms unless otherwise stated.

Also unless specified, the terms absorption and adsorption can be used to mean any sorption process. Both can be used to describe DAC processes. In DAC applications, absorption is used to refer to the process by which carbon dioxide is attracted to the sorbent and becomes evenly distributed throughout the whole body of the absorbate material. This is most commonly understood to occur when the sorbent is in the liquid or aqueous state. The term adsorption is used to refer to the process when carbon dioxide is attracted to the sorbent and becomes distributed on the surface of the sorbent. For the purpose of this document the term adsorption has been used. However, this does not imply that absorption cannot also occur.

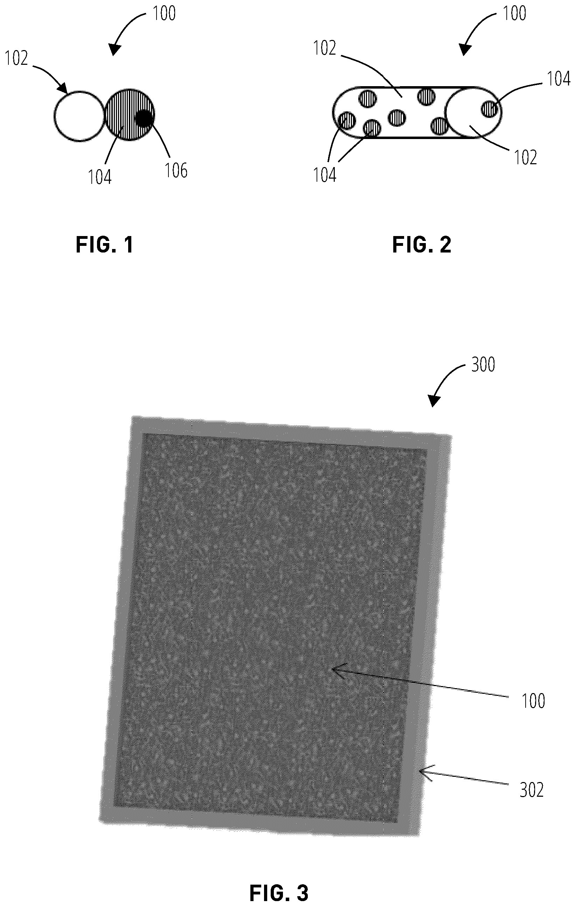

In one embodiment of the present invention a reusable filter design or combined filter 100 that builds on existent filtering technology to remove both particulate matter and CO₂ from the air passed through the filter, see FIG. 1 and FIG. 2. The combined filter 100 has the equivalent or better particulate filtration efficiency of a paper filter with MERV 8 to MERV 13 rating. In one embodiment, the combined filter 100 uses nonwoven technology which allows for a lower pressure differential across the particle filtering portion 102 of the combined filter 100. A person skilled in the art would know that there are many known methods for producing the particulate filter 102, including but not limited to electro spun, phase separation or force spun methods. The DAC sorbent or sorbent media 104 can be distributed as particles throughout the fibers of the particulate filter 102 during the spinning process or the sorbent media 104 can be directly spun as a polymer. Polymers used for the particulate filter 102 can include polyacrylonitriles, nylons, polyimides, polyvinylidene fluorides, polyamides, polylactic acids, polypropylene, polystyrene, or any other known substance or compound known in the art. The sorbent media 104 can be manufacture from polyethyleneimines, MOFs, amine functionalized silica, alumina, cellulose, polymers, or any other known substance or compound known in the art.

In one embodiment, the particulate filter 102 can be a filter membrane with the sorbent media 104 spun coaxially, triaxially or side-by-side with the particulate filter 102 during manufacture. In one embodiment, a volatile solvent can be intentionally added to the sorbent media 104. The volatile solvent can be removed via evaporation after the spinning of the sorbent media 104 to ensure the fibers of the sorbent media 104 are sufficiently porous to allow for sufficient exposure of the sorbent media 104 to air or other carbon dioxide containing gas to facilitate adsorption of CO₂. After the volatile solvent has been removed from the sorbent media 104, a pore 106 or pores 106 are created in the sorbent media 104 to increase the surface area that is exposed to air or carbon dioxide containing gas, See FIG. 1.

In one embodiment, the sorbent media 104 is integrated into the combined filter 100 used in a filter assembly 300. The combined filter 100 may increase the differential pressure very slightly (between a range of 10-1 Pa), when compared to a conventional (paper) filter of the same frame 302 size, but since the differential pressure across the particulate filter 102 is configured at a lower pressure drop than the standard equivalent paper AC filter, the addition of sorbent media 104 brings the total pressure drop across the combined filter 100 to a range at or below a standard equivalent paper AC filter.

In one embodiment, the combined filter 100 of the filter assembly 300 includes a combination of polymers with a nonpolar and polar composition, the filter assembly 300 is stable in humid, wet, and steam environments, See FIG. 3. The filter assembly 300 can be washed to remove particulate build up and then placed in a centralized desorption machine to remove and collect the carbon dioxide for later use. In one embodiment, the filter assembly 300 and the sorbent media 104 within are heated during a desorption process. During the desorption process, the sorbent media 104 can be heated with steam, an indirect heating method, such as electrical heating elements, or any known method in the art. The filter assembly 300 can be sized to fit any existing HVAC filter configuration. The filter assembly 300 is designed to be desorbed in a separate location and each filter assembly 300 is reusable after the desorption process.

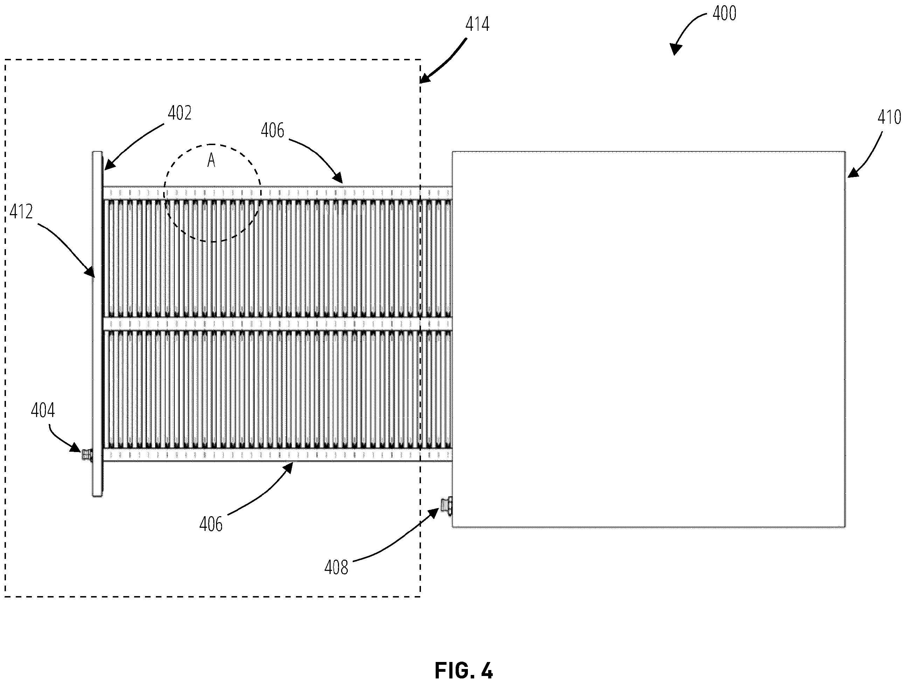

As seen in FIG. 4, in one embodiment the invention is a combined transportation/desorption or mobile desorption chamber 400 used to transport the filter assemblies 300 from the dispersed adsorption sites to the desorption facility and are also used as the equivalent to a contactor housing, as known in the art, during the desorption stage.

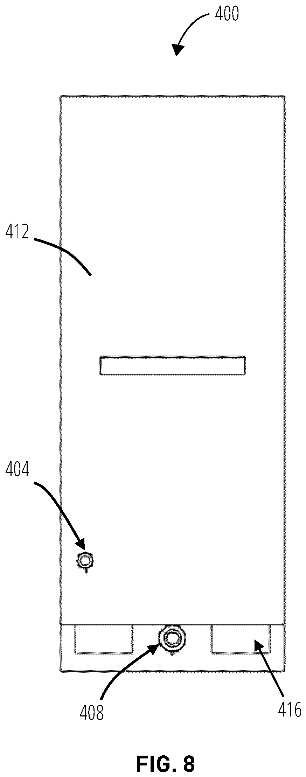

In one embodiment, the mobile desorption chambers 400 are box or rectangular in shape with slotted indentations or filter slots 504 defined by hollow divider walls or channels 502 on a sliding rack 414 in the interior of the mobile desorption chamber 400 allowing the easy insertion and removal of filter assemblies 300 into parallel channels or filter slots 504 in the sliding rack 414. See FIG. 4-6. The mobile desorption chamber 400 itself fits into the transport van or truck bed and can be easily inserted and removed from the van/truck and attached to and detached from the desorption machinery. The mobile desorption chamber 400 is insulated via vacuum insulated walls or chamber walls of an insulating material. The mobile desorption chamber 400 may also include circulation channels for cooling agents or heat transfer fluids configured to keep the interior of the mobile desorption chamber 400 temperature below 30°C, including during transport of the filter assemblies 300, preventing the premature desorption of CO₂ from the filter assemblies 300 during transport. The mobile desorption chambers 400 can be configured to include connections or fluid ports 404 for injecting fluid to remove particulate matter from the filter assemblies 300. There are spray nozzles tangential to the direction of the filter assemblies 300 allowing for water or air to be injected as a spray to rinse the filter assemblies 300. There is a drain with an extraction port 408 at the bottom of the mobile desorption chamber 400 allowing for the removal of water and particulates from the mobile desorption chamber 400. See FIG. 8. Additionally, the mobile desorption chamber 400 can be attached to an inlet for steam or other heat transfer medium, the fluid port 404 can be used for this purpose or any number of additional ports can be added to the mobile desorption chamber 400 as needed by a particular embodiment. The inlet for the injection of particulate removal fluid can be the same inlet as for the heat transfer medium or a separate inlet. The mobile desorption chamber 400 can be hermetically sealed with a vacuum tight seal 402 around the chamber door 412. The mobile desorption chamber 400 also has a mechanism of connecting a vacuum to the chamber to remove ambient air from the chamber and later removing CO₂ and collecting it downstream of the mobile desorption chamber 400. The extraction port 408 and vacuum connection can be the same or an independent port can be added for the vacuum pump or other necessary desorption or collection equipment. In one embodiment the extraction port 408 is also used to collect CO₂ during or at the end of the desorption cycle. The extraction port 408, fluid port 404, and any other necessary port required by the mobile desorption chamber 400 can be a quick disconnect style connector of appropriate pressure and temperature rating, or any type of connection known in the art.

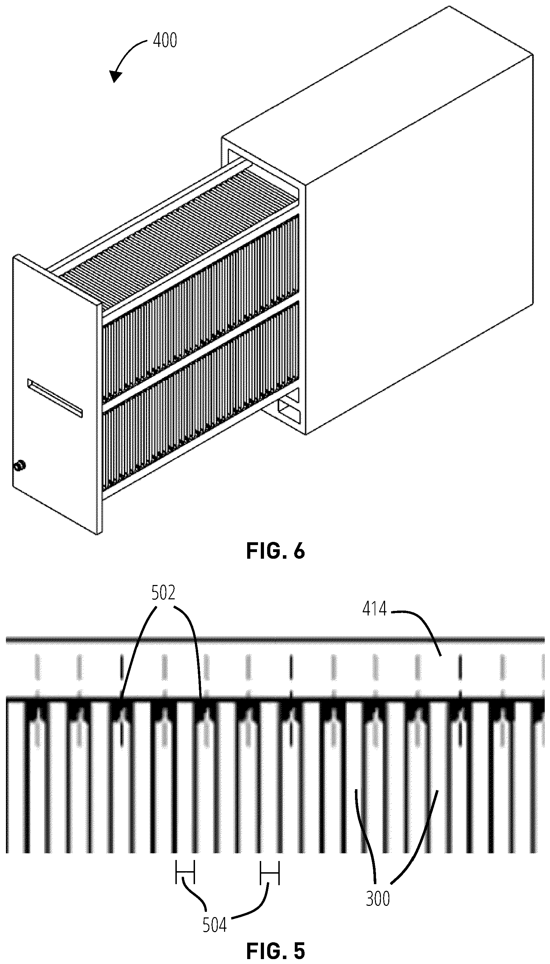

FIG. 5 is an enlargement of circled section A of FIG. 4. The ends of the individual filter assemblies 300 can be seen to extend to the sliding rack 414 inside of the filter slots 504 that are defined by the slot walls or channels 502. The filter slots 504 are designed to allow for the filter assemblies 300 to be slid into and out of the sliding rack 414. The thickness of the channels 502 can vary depending on the configuration of an embodiment. In one embodiment the channel 502 include channels or passages for a heat transfer fluid and or for a cleaning agent. The cleaning agent can be used to remove the particulates from a used filter assembly 300. The cleaning agent can be water, air, or any other known substance or solution.

FIG. 6 shows the mobile desorption chamber 400 with the sliding rack 414 in the open position. The sliding rack 414 can be one filter assembly 300 wide or can be wide enough to hold two or more filter assemblies 300 in a filter slot 504.

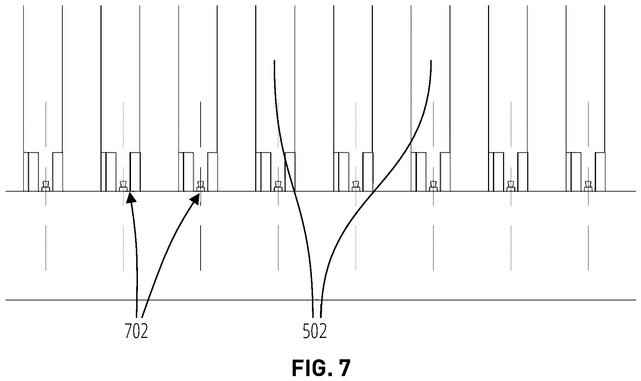

FIG. 7 shows a nozzle 702 within each of the channel 502 of mobile desorption chamber 400. The nozzles 702 can be configured to spray a cleaning agent against the filter assemblies 300 within or between filter slots 504.

A front view of an embodiment of a mobile desorption chamber 400 can be seen in FIG. 8. The extraction port 408 is located at a low point of the mobile desorption chamber 400. The fluid port 404 can be located on the chamber door 412 as seen in FIG. 8 or can be located on the chamber body 410, depending on the configuration of the internal fluid channels. The mobile desorption chamber 400 may include lifting slots 416 along the length direction for loading and unloading onto a transportation unit 900. The lifting slots can be sized or configured to work with existing loading machinery, such as forklifts.

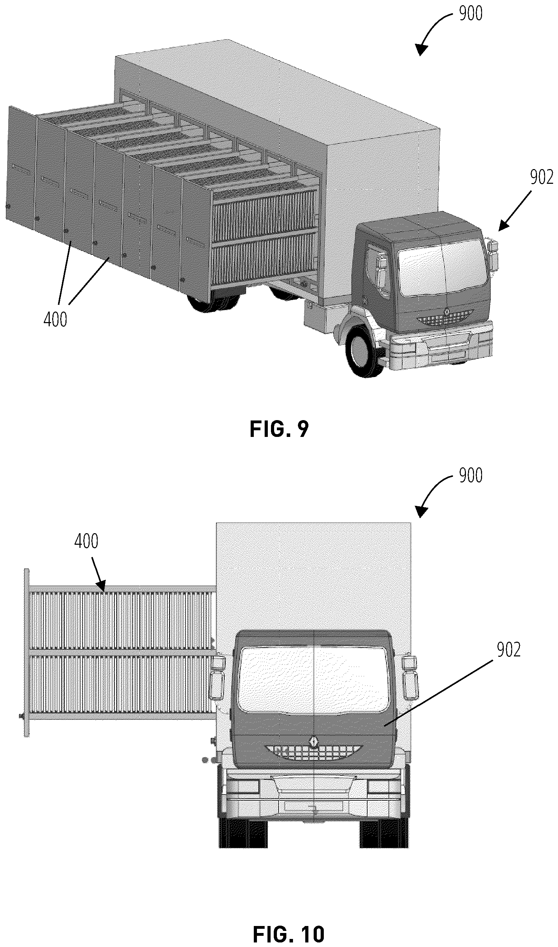

FIG. 9 and FIG. 10 are examples of an embodiment of a transportation unit 900. In this embodiment, a truck 902 has been configured to hold 7 mobile desorption chambers 400 that open perpendicular to the length direction of the truck 902, via the sliding racks 414. Different sized trucks 902 and mobile desorption chambers 400 can be manufactured depending on the application, for example smaller trucks with two mobile desorption chambers 400 that are configured to have the sliding racks 414 extend away from the truck 902 in the length direction.

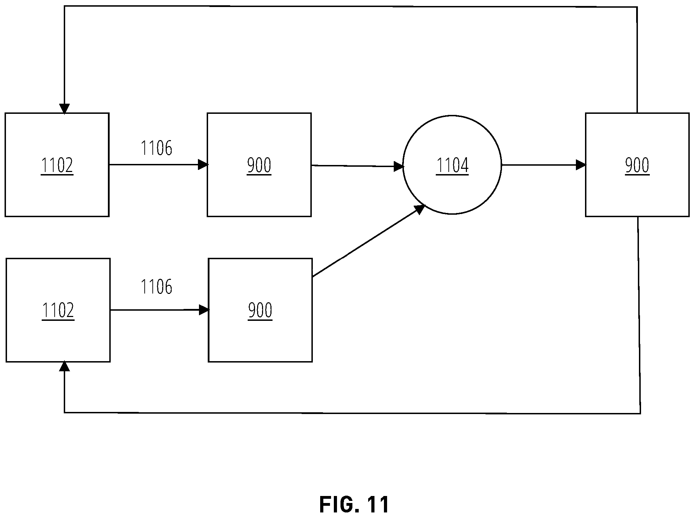

FIG. 11 is an embodiment of the present method for distributed direct air carbon capture for use with existing HVAC systems or passive carbon capture using a sorbent media 104 within a framed filter, filter assemblies 300 or passive filter assemblies 1500. The adsorption locations 1102 can be an existing HVAC unit in a building with IAQ that can be improved by the adsorption of carbon dioxide, such as shopping malls, schools, office buildings, etc. In other embodiments the adsorption locations 1102 can also include passive adsorption within the same or similar buildings, passive filter assemblies 1500 can be installed in conjunction with or as an alternative to combined filters 100 of the sorbent filters 1106 used with HVAC units. The transportation units 900 can be configured to transport any combination of filter assemblies 300 and or passive filter assemblies 1500. In one embodiment the transportation units 900 are configured as mobile desorption chambers 400 with at least one fluid port 404 and at least one extraction port 408. The Desorption facility 1104 is configured to provide the heat transfer, filter cleaning and carbon capture auxiliaries needed by the transportation unit 900 via the fluid ports 404 and extraction ports 408. The method for distributed direct air carbon capture for use with existing HVAC systems or passive carbon capture includes the steps of collecting a sorbent media 104 containing filter assembly in a transportation unit 900, filling the transportation unit 900 with any combination of filter assemblies 300 and or passive filter assemblies 1500, relocating the transportation unit 900 to a Desorption facility 1104, connecting the transportation unit 900 to the necessary auxiliaries required for desorption within the transportation unit 900, including steam, heat transfer fluids, electricity, cleaning solutions, water, etc. Conducting the desorption process within the transportation unit 900, capturing the released carbon dioxide. If necessary, cleaning the filter assemblies, as in the case of filter assemblies 300 used with HVAC units. Returning the filter assemblies to individual adsorption locations 1102 via the transportation units 900. The collection and returning to service of the filter assemblies can be coordinated in an economically viable schedule or logistical arrangement.

In one embodiment the transportation units 900 can include at least one mobile desorption chamber 400 that is transferred from the transportation unit 900 to the Desorption facility 1104, desorption can take place within the mobile desorption chamber 400. In one embodiment the transportation unit 900 is reloaded with a mobile desorption chamber 400 full of filter assemblies that are ready for delivery to individual adsorption locations 1102. In one embodiment, the desorption process can be time intensive and increased efficiency can be achieved by keeping the transportation unit 900 in operation, by swapping out the mobile desorption chambers 400, rather than waiting for the desorption process to be completed. Efficiency is also increased by conducting the desorption process within the mobile desorption chambers 400 rather than unloading the individual filter assemblies. In one embodiment, the desorption process is advantageously conducted while the mobile desorption chambers 400 are left on the transportation unit 900 due to higher costs related to unloading and or reloading the transportation units 900 versus waiting for the desorption process to complete on the original transportation unit 900. In one embodiment the mobile desorption chamber 400 does not include auxiliaries necessary to clear particulates from the passive filter assemblies 1500 as forced air flow will not occur in the passive filter assemblies 1500.

The adsorption locations 1102 are configured to use at least one sorbent filter 1106. The at least one sorbent filter 1106 can be any combination of filter assemblies 300 designed to work with one or more HVAC units at an adsorption location 1102 or passive filter assembly 1500 designed to work with any number of passive absorption stations 1108 installed at an adsorption location 1102.

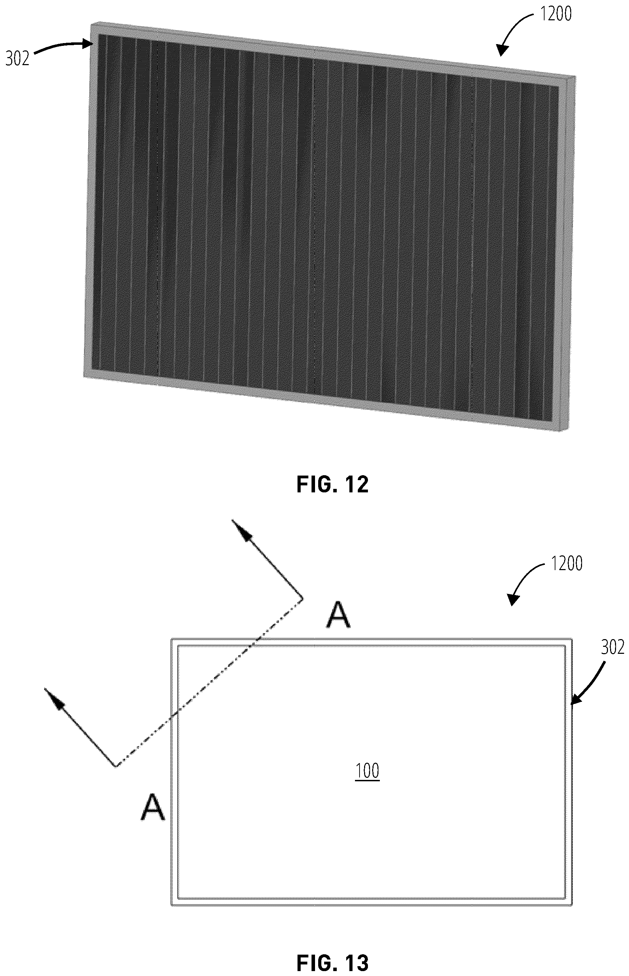

In one embodiment of the invention, a reusable electrostatic filter assembly 1200 builds on existent filtering technology to remove dust, pollen, dander and small particles from air passed through the electrostatic filter assembly 1200 while also suspending a direct air capture sorbent or sorbent media 104 into the filter media or electrostatic filter layers 1404, allowing the capture or adsorption of carbon dioxide molecules by the electrostatic filter assembly 1200. See FIG. 12. The electrostatic filter assembly 1200 is meant to have the equivalent filtration as a conventional HVAC filter with a MERV rating between MERV 8 and MERV 13 for a standard residential or commercial AC unit. The electrostatic filter assembly 1200 is an electrostatic filter which allows for a lower pressure differential across the particle filtering portion of the electrostatic filter assembly 1200. The DAC filter or sorbent media 104 is physically entrained within a mesh 1402 screen amidst polymers typically used for electrostatic particulate filtration, in this embodiment one or more electrostatic filter layers 1404. In one embodiment, between a screen or mesh 1402 on either side of the electrostatic filter assembly 1200 and within the electrostatic filter layers 1404. See FIG. 12-14.

The sorbent media 104 integrated into the electrostatic filter layers 1404 may increase the differential pressure very slightly (less than 10Pa) above the differential pressure for a conventional electrostatic filter (only designed to filter particles), but since the differential pressure across electrostatic filter layers 1404 is lower than an equivalent paper AC filter, the addition of sorbent media 104 brings the total pressure drop across the electrostatic filter assembly 1200 to a range at or below a standard equivalent paper AC filter.

In one embodiment, the electrostatic filter assembly 1200 includes a combination of polymers with a nonpolar and polar composition, the electrostatic filter assembly 1200 is stable in humid, wet, and steam environments. See FIG. 12. The electrostatic filter assembly 1200 can be washed to remove particulate build up and then placed in a centralized desorption machine to remove and collect the carbon dioxide for later use.

As seen in FIG. 13, this embodiment of the electrostatic filter assembly 1200 is rectangular in shape to match conventional HVAC filters. The size and shape of the electrostatic filter assembly 1200 can be configured to match any existing conventional HVAC filter.

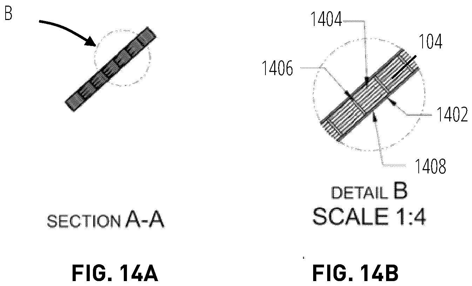

FIG. 14A is a cross-sectional view of the electrostatic filter assembly 1200 of FIG. 13 through cut plane A-A.

The individual air permeable layers that have sorbent entrained within them or electrostatic filter layers 1404 of the electrostatic filter assembly 1200 of FIG. 14B can be seen in enlargement B. In this embodiment, the electrostatic filter assembly 1200 has seven electrostatic filter layers 1404. The sorbent media 104 can be mechanically inserted between the electrostatic filter layers 1404 or be imbedded within the electrostatic filter layers 1404.

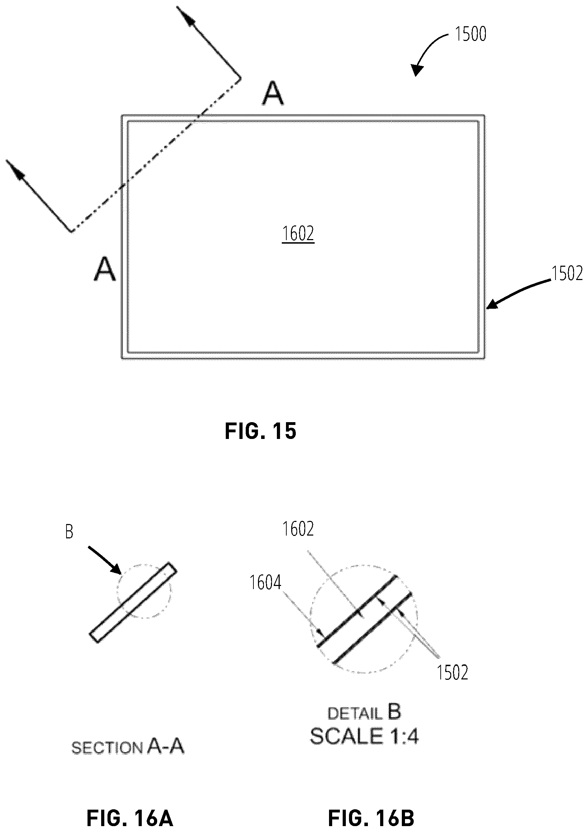

In one embodiment, a passive filter assembly 1500 incorporates existent air purification and DAC sorbent filtering technology. The passive filter assembly 1500 is composed of an outer casing composed of a semipermeable membrane 1604 to encapsulate the sorbent media 1602, See FIG. 15 thru FIG. 16B. During a filter change, the whole cartridge or passive filter assembly 1500 can be removed from the filter housing and transported to the desorption hub, where the cartridge is placed in the desorption machinery. Or alternatively, the sorbent media 1602 can be removed from the passive filter assembly 1500 and transported to the desorption facility as a bare substance. In one embodiment the sorbent media 1602 is a plurality of amine coated polymer beads or spheres that are collected after adsorption and the empty passive filter assembly 1500 is filled with new or refreshed sorbent media 1602 to restart the adsorption process.

The passive filter assembly 1500 seen in FIG. 16A and FIG. 16B, which are enlargements of the cross-section A-A of FIG. 15, the sorbent media 104 can be a loose media that can be poured in and out of the frame 1502 of the passive filter assembly 1500. In other embodiments the sorbent media 1602 is a sheet, plurality of sheet, monolith or any other known and applicable sorbent media 1602 that can be contained between the membranes 1604. As the passive filter assembly 1500 will not be subjected to a pressurized flow of carbon dioxide containing gas, the sorbent media 1602 does not need to be integrated into a particulate filter or other structural support. In embodiments where the sorbent media 1602 cannot be removed on site, the passive filter assemblies 1500 can be collected via a mobile desorption chamber 400 and undergo the desorption as the combined filters 100 discussed above. In one embodiment the passive filter assemblies 1500 are sized to match a conventional HVAC filter such that the same mobile desorption chamber 400 used for active combined filters 100 can be used with the passive filter assemblies 1500. The passive filter assemblies 1500 are manufactured from materials that are stable in humid, wet, and steam environments. The passive filter assemblies 1500 can be collected from dispersed adsorption sites and placed in a centralized desorption machine to remove and collect the carbon dioxide for later use.

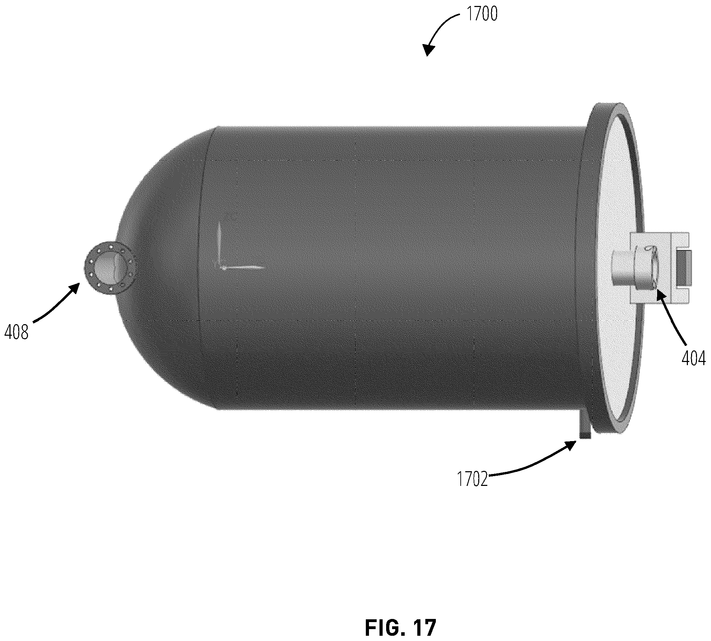

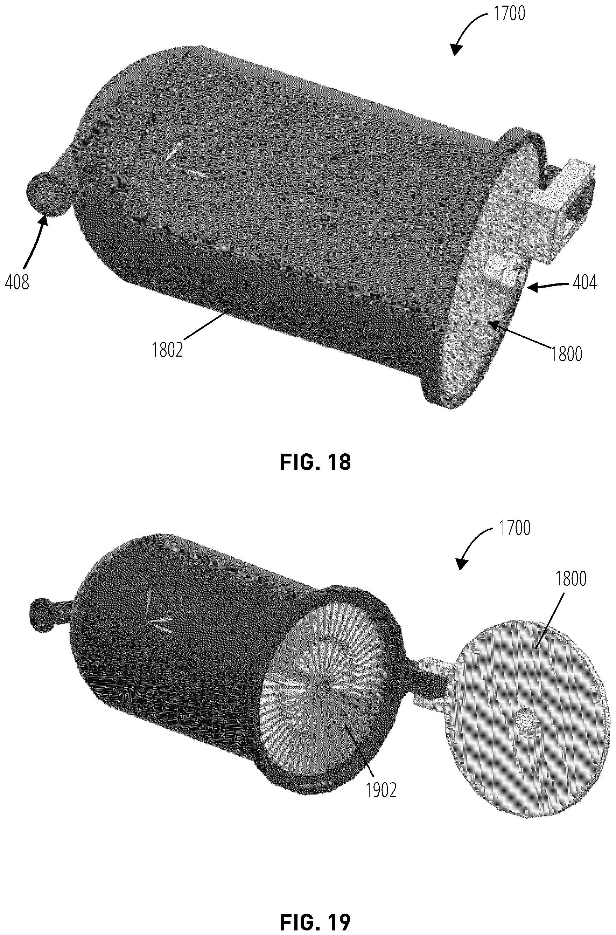

FIG. 17 through FIG. 23 is an embodiment of a mobile desorption chamber 1700 that is cylindrical in shape. This embodiment has at least one extraction port 408 and fluid port 404. Similar to the embodiment of FIG. 6, this embodiment has a rotating rack 1902 that can slide out of the mobile desorption chamber 1700. In this embodiment a drain 1702 is included at a low point of the mobile desorption chamber 1700.

Similar to the embodiment of FIG. 6, this embodiment has a rotating rack 1902 that can slide out of the mobile desorption chamber 1700 and rotate about the central axis of the mobile desorption chamber 1700 to allow for installation and removal of filter assemblies 300 and or passive filter assemblies 1500.

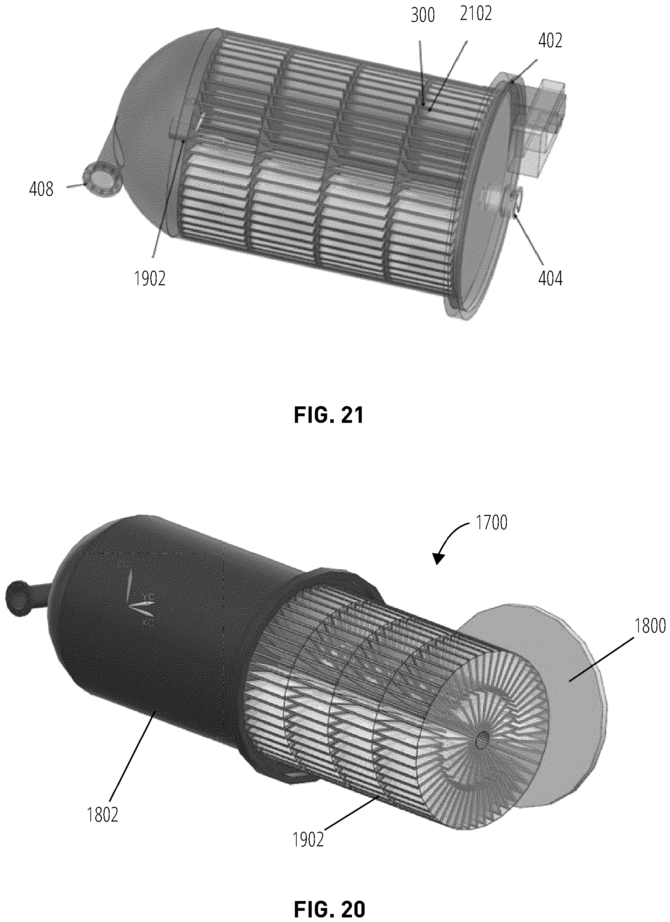

As seen in FIG. 20, the sliding rack 414 can extend outside of the chamber body 1802 to allow for installation and removal of the filter assemblies 300 and or passive filter assemblies 1500. Fig. 21 is a transparent view of the mobile desorption chamber 1700 with the sliding rack 414 installed inside of the mobile desorption chamber 1700.

The rotating rack 1902 has slots or gaps 2102 between each of the filter assembly 300 or passive filter assemblies 1500. The gaps 2102 facilitate the placement of nozzles 702 and or fluid channels. The fluid channels can be evenly spaced in applications that use the fluid channel to deliver steam in the case of direct heat transfer or circulate a heat transfer fluid near the filter assemblies 300 or passive filter assemblies 1500 in the case of indirect heat transfer during the desorption process.

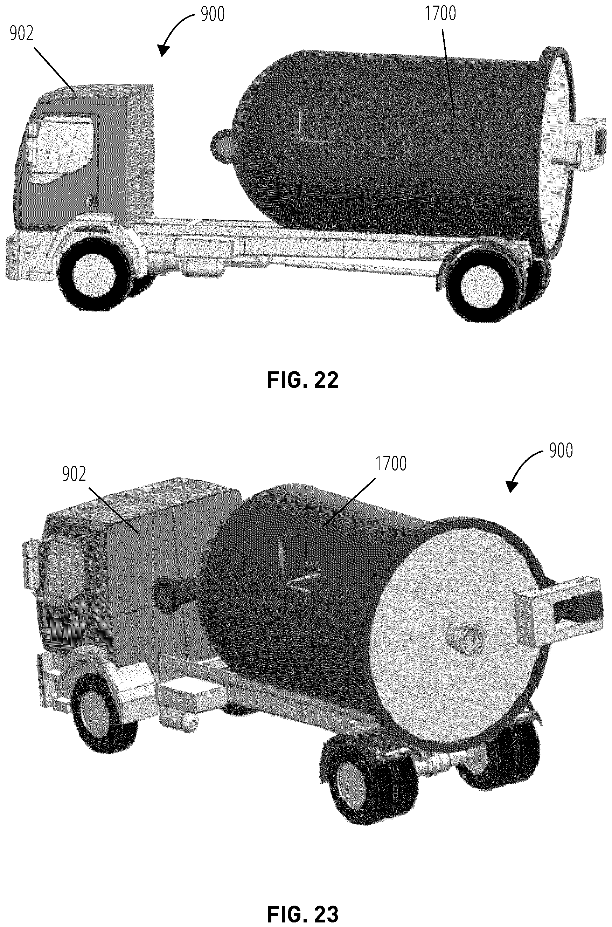

FIG. 22 and FIG. 23 are an embodiment of a transportation unit 900 with a mobile desorption chamber 1700 installed on the rear of a truck 902 with the chamber door 1800 and rotating rack 1902 extending away from the truck 902 in the length direction.

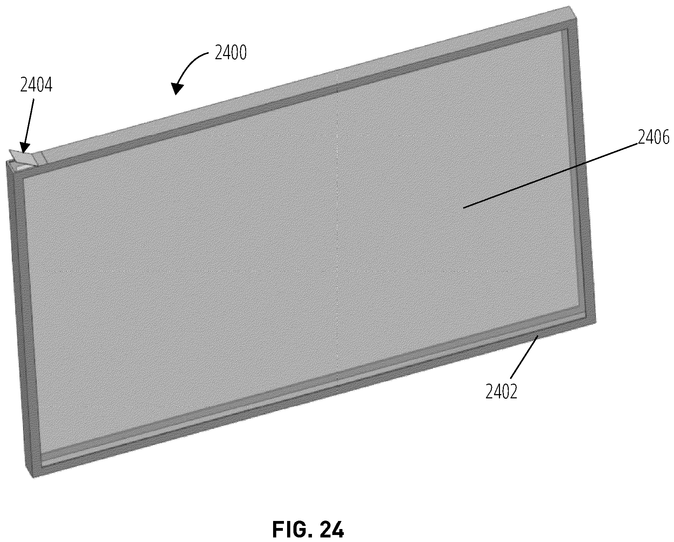

FIG. 24 is an embodiment of a loose sorbent filter assembly 2400 for use with a loose sorbent media, such as an amine coated polymer beads or spheres. The frame 2402 includes a port 2404 that can be used for emptying used sorbent media and refilling the loose sorbent filter assembly 2400 with fresh sorbent media. In this embodiment, the mobile desorption chamber 400 only needs to have one chamber to hold the loose sorbent from each adsorption location 1102.

Although various embodiments that incorporate disclosed concepts have been shown and described in detail herein, those skilled in the art can readily devise many other varied embodiments that still incorporate these disclosed concepts. Disclosed embodiments are not limited to the specific details of construction and the arrangement of components set forth in the description or illustrated in the drawings. Disclosed concepts may be implemented by other implementations, and of being practiced or of being carried out in various ways, which now would become apparent to one skilled in the art.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A method of distributed direct air carbon capture for use with existing HVAC systems comprising the steps of:
replacing a conventional HVAC filter at a plurality of adsorption locations (1102) with a filter assembly (300),
configuring the filter assembly (300) to match the conventional HVAC filter in a set of dimensions and a pressure drop, and including a particulate filter (102) and a sorbent media (104) as a combined filter (100) within a frame (302),
installing the filter assembly (300) in a HVAC unit,
adsorbing carbon dioxide in the sorbent media (104) of the combined filter (100) by circulating a carbon dioxide containing gas through the combined filter (100) via the HVAC unit,
removing the filter assembly (300) from the HVAC unit when the sorbent media (104) has reached a predefined adsorption limit of carbon dioxide,
replacing the filter assembly (300) with a fresh filter assembly (300) that has not yet reached the predefined adsorption limit of carbon dioxide,
storing the full filter assembly (300) in a transportation unit (900),
configuring the transportation unit (900) to maintain a transport temperature and provide a sealed environment,
filling the transportation unit (900) with a plurality of full filter assemblies (300) and relocating the transportation unit (900) to a desorption facility (1104),
configuring the transportation unit (900) to interface with the desorption facility (1104) and preforming a desorption process for the plurality of full filter assemblies (300) within the transportation unit (900),
collecting an amount of carbon dioxide from the transportation unit (900).

2. The method of claim 1 further comprising the steps of:
configuring the transportation unit (900) to include at least one mobile desorption chamber (400), each mobile desorption chamber (400) including at least one fluid port (404), and at least one extraction port (408).

3. The method of claim 2 further comprising the steps of:
configuring the at least one mobile desorption chamber (400) to include a plurality of fluid passages within a plurality of channels (502),
evenly distributing the plurality of fluid passages across a surface area of each of the plurality of full filter assemblies (300),
supplying the plurality of fluid passages of the at least one mobile desorption chamber (400) with a cleaning agent via the at least one fluid port (404),
releasing particulates trapped within the plurality of full filter assemblies (300) by spraying the cleaning agent on the plurality of full filter assemblies (300),
removing the used cleaning fluid and particles via the at least one extraction port (408) of the transportation unit (900).

4. The method of claim 3 further comprising the steps of:
configuring the fluid passages to include a plurality of nozzles,
releasing particulates trapped within the plurality of full filter assemblies (300) by spraying the cleaning fluid on the plurality of full filter assemblies (300) via the plurality of nozzles,
removing the used cleaning fluid and particles via an extraction port (408) of the at least one mobile desorption chamber (400) of the transportation unit (900).

5. The method of claim 3 further comprising the steps of:
configuring the plurality of fluid passages to circulate a heat transfer fluid to heat or cool the plurality of full filter assemblies (300),
indirectly heating the plurality of full filter assemblies (300) during the desorption process with the heat transfer fluid.

6. A method of distributed direct air capture for use with passive carbon capture comprising the steps of:
installing passive adsorption stations at a plurality of adsorption locations (1102) with a passive filter assembly (1500),
configuring the passive filter assembly (1500) to passively adsorb carbon dioxide while supported by a frame (1502),
adsorbing carbon dioxide in the sorbent media (1602) of the passive filter assembly (1500) by exposing the sorbent media (1602) to a carbon dioxide containing gas,
removing the passive filter assembly (1500) from the passive adsorption station when the sorbent media (1602) has reached a predefined adsorption limit of carbon dioxide,
replacing the passive filter assembly (1500) with a fresh passive filter assembly (1500) that has not yet reached the predefined adsorption limit of carbon dioxide,
storing the full passive filter assembly (1500) in a transportation unit (900),
configuring the transportation unit (900) to maintain a transport temperature and provide a sealed environment,
filling the transportation unit (900) with a plurality of full passive filter assemblies (1500) and relocating the transportation unit (900) to a Desorption facility (1104),
configuring the transportation unit (900) to interface with the desorption facility (1104) and performing a desorption process for the plurality of full passive filter assemblies (1500) within the transportation unit (900),
collecting an amount of carbon dioxide from the transportation unit (900).

7. A mobile desorption chamber (400, 1700) for use with a plurality of sorbent filters (300, 1500) comprising,
at least one fluid port (404),
at least one extraction port (408),
at least one filter storage unit (414, 1902),
a chamber body (410, 1802) and a chamber door (412, 1800) configured to produce a pneumatically sealed environment with a seal (402),
a plurality of channels (502),
wherein the plurality of sorbent filters (300, 1500) can be stored between the any one of the plurality of channels (502).

8. The mobile desorption chamber (400, 1700) of claim 7 wherein the at least one filter storage unit is a sliding rack (414).

9. The mobile desorption chamber (400, 1700) of claim 7 wherein the at least one filter storage unit is a rotating rack (1902).

10. A filter assembly (300) for use with distributed carbon capture comprising:
a combined filter (100) including a particulate filter (102) and a sorbent media (104),
a frame (302) to support the combined filter (100),
wherein the filter assemblies (300) are configured to match an existing HVAC filter in a set of dimensions and an operational pressure drop.
